# EUROPEAN PATENT APPLICATION

(11) **EP 4 372 950 A1**
(43) Date of publication of application: **22.05.2024**
(21) Application number: 22208657.1
(22) Date of filing: 21.11.2022
(51) Int. Cl.: H02J 4/00, H02J 3/28, H02J 3/32, H02J 1/14

(54) **ENERGY MANAGEMENT METHOD**

(71) Applicant: Collins Aerospace Ireland, Limited, Cork (IE)
(72) Inventor: TORCHIO, Marcello, Cork City T12 XE72 (IE); FRANZINI, Giovanni, Glanmire T45 FD66 (IE)
(74) Representative: Dehns

(57) **Abstract**

An energy management method is provided. The energy management method comprises: determining a control signal (118) for a flexible power device (104a) of a plurality of flexible power devices (104); modulating the control signal with an identification signal; providing the control signal (120) to the flexible power device of the plurality of flexible power devices; receiving an aggregate power consumption signal of (124) the plurality of flexible power devices from the plurality of flexible power devices; and determining whether the identification signal is present in the aggregate power consumption signal. A computer program product comprising instructions which, when the program is executed by a computer, cause the computer to carry out the energy management method is also provided. An energy management system (102) for an aircraft adapted to perform the energy management method is also provided. An aircraft comprising the energy management system (102) is provided. The aircraft comprises a power source and a plurality of flexible power devices (104).

## Description

The invention relates to an energy management method, and particularly to an energy management method in which an identification signal is provided to a flexible power device.

Various systems such as vehicles, homes, offices, networks, grids and so on are increasingly including more electronic devices, which devices then benefit from management to control their power usage. Aircraft in particular are becoming more electric and typically comprise multiple flexible power devices and at least one energy management system (EMS) for controlling the power consumption of those flexible power devices. A flexible power device is a power consuming device which may vary its power consumption in response to a control signal such as e.g. a set-point value provided by an EMS. Flexible power devices in an aircraft may include for example lighting systems, climate control systems, entertainment systems and passenger comfort systems, as well as systems for mission preparation. In general, the EMS balances power demands with the amount of power available from a generator or local energy storage such as a battery. The EMS manages the power consumption of the flexible power devices so that the aggregate power consumption of the flexible power devices does not exceed an energy use threshold. The energy use threshold may be a dynamic threshold and may vary as needed during different stages of a flight or mission. For example, to keep consumption within a given threshold, the EMS may support the overall power network by taking additional power from local energy storage. The EMS may of course manage power consumption according to any suitable criteria.

In operation, the power demands of the flexible power devices may vary, for example according to a phase of the mission or the choices or requirements of passengers. For example, some devices are preparatory to support a mission and as such their power consumption may be primarily at the start of a mission. In other cases, as with the power devices present at the seat-level, the power demand depends on the passenger requests, and its variability during the flight cannot be reliably predicted.

The energy use threshold may vary depending on the energy available, for example on the amount of energy stored in an energy storage device such as a battery or fuel cell, fuel tank, or the amount of energy required by critical systems such as engines at a particular phase of a mission. The energy use threshold may be determined by a flight management system. The energy use threshold may be determined based on a mission phase. Accuracy and timeliness of power management by the EMS may have a significant impact on the energy efficiency of the aircraft, mission safety, and passenger experience. Similar considerations may apply to other systems, buildings, and vehicles such as trains or automobiles, and so on.

In general, a flexible power device cannot report its current power consumption to an EMS. Rather, the EMS is only aware of the overall power consumption of a zone, which is the sum of all the power demands of the flexible power devices belonging to that zone. An example of a zone could be a seat of an aircraft, and all the power devices that are part of it, though zones may include any suitable plurality of flexible power devices.

When flexible power devices are distributed in zones in this way, there may be instances in which the EMS cannot provide a desired supervisory action since it does not have oversight of each flexible power device individually, leading to a mismanagement of the system power. For example, such mismanagement could occur if one or more flexible power devices belonging to a specific zone are off. In that case, because the EMS only sees the overall power consumption of a zone, it cannot distinguish whether or not a specific flexible power device is using power from the network. Then, in the case of an intervention by the EMS (for instance to limit or reduce power consumption within predetermined bounds), the EMS might issue a control signal to the flexible power device that is off. Such an intervention would not have any impact over the overall power consumption. Therefore, the EMS would fail in keeping the power consumption within bounds.

In view of the above, a need exists to improve management and energy efficiency in systems comprising flexible power devices, especially comprising flexible power devices distributed in zones.

According to a first aspect of the present invention, there is provided an energy management method comprising: determining a control signal for a flexible power device of a plurality of flexible power devices; modulating the control signal with an identification signal; providing the control signal to the flexible power device of the plurality of flexible power devices; receiving an aggregate power consumption signal of the plurality of flexible power devices from the plurality of flexible power devices; and determining whether the identification signal is present in the aggregate power consumption signal.

The method may comprise determining that the flexible power device of the plurality of flexible power devices is on (e.g., using power) in response to determining that the identification signal is present in the aggregate power consumption signal. The method may comprise determining that the flexible power device of the plurality of flexible power devices is off (e.g., not using power) in response to determining that the identification signal is not present in the aggregate power consumption signal. Thus, the method may comprise determining that the flexible power device is on if and only if the identification signal is present in the aggregate power consumption signal. The method therefore allows identification of whether the power device is on or off, and therefore may improve the quality of supervisory actions in respect of the flexible power device.

The method may be used in any suitable system comprising a plurality of flexible power devices, such as buildings, homes, offices, apartments, networks, grids and so on. The method may be used in any vehicle and may therefore be a method of energy management of a vehicle, for example an aircraft such as a More Electric Aircraft (MEA). Thus, although the present disclosure mainly considers the method as applied to aircraft, the method may be more widely applied to any suitable system comprising a plurality of flexible power devices. For example, the method may be applied to any system in which an Energy Management System (EMS) is operable to manage energy usage of flexible power devices.

The identification signal may be a unique identification signal. The identification signal may be unique to the flexible power device to which is it provided. The identification signal may be unique among a zone comprising the plurality of flexible power devices. The identification signal may be unique among the entire system (e.g., among the entire aircraft). The method may comprise using an energy management system (EMS) to determine which of a plurality of flexible power devices (FPDs) is/are operating, and/or which of the flexible power devices is/are not operating. This may provide more efficient energy management by allowing the EMS to reduce power consumption of FPDs which are known to be operating. The method may prevent the EMS from instructing a non-operating FPD to reduce power consumption, which action would otherwise fail to reduce the aggregate power consumption of the FPDs, wasting time and reducing the responsiveness and efficiency of the EMS. For example, without using an identification signal per the present invention an EMS could simply mange power consumption by instructing a flexible power device to reduce energy usage, and then subsequently check whether that instruction has resulted in reduced power consumption. If it has not, the EMS may instruct another FPD to try and reduce power. However, that approach would increase the response time of the system, which may be unsafe and/or unacceptable.

The response time of the EMS may be the delay between the EMS determining that the aggregate power consumption must be reduced, for example in order to remain below an energy use threshold, and the time at which the aggregate power consumption is reduced by the EMS. A reduced response time may reduce the risk that the aggregate power consumption exceeds an energy use threshold and may improve the energy efficiency of the vehicle.

The method may comprise using an EMS to perform the steps recited above.

The method may allow the EMS to determine whether an FPD is operating without instructing the FPD to reduce its power consumption. For example, in other power management methods, to reduce aggregate power consumption, it may be necessary to sequentially send instructions to a plurality of FPDs to reduce power consumption, until such an instruction is sent to an FPD which is operational, and power consumption is reduced. Instructing certain FPDs to reduce their power consumption may be detrimental to passenger experience, for example reducing passenger comfort by reducing light levels, compromising climate control, disabling power sockets or seat positioning motors, or interrupting an entertainment or information system, and therefore should only be done for sufficient reason.

Instructing an FPD to reduce its power consumption may also introduce a delay before the EMS may determine whether the FPD is operating, because FPDs may have a non-instantaneous response to such an instruction, and the resulting power consumption reduction may take time to become apparent in the aggregate power consumption signal. This may increase the response time of the EMS. The method may thus enable the EMS to control the power consumption of FPDs with a reduced response time. The method may enable the EMS to control the power consumption of FPDs with a low interruption tolerance. The method may also be non-intrusive and allow improved power management of the flexible power devices. An example of an FPD with a low interruption tolerance may be a passenger entertainment system because an interruption of that system's operation will be highly noticeable and disruptive for the passenger. Other FPDs, for example flight critical FPDs, may of course have zero tolerance for interruption. The method may allow the EMS to avoid reductions in power consumption which are not necessary to reduce aggregate power consumption.

It may also be inconvenient or impossible to identify the effect of an instruction to the FPD in the aggregate power consumption signal because that signal may be changing for other reasons as well, such as passengers choosing to activate or deactivate other FPDs. The provision of an identification signal may allow the method to distinguish a target FPD from other FPDs.

The method may be implemented with low cost and complexity. The method may be compatible with existing systems and/or vehicles with minimal modification. The method may not require an individual data flow from the FPD to the EMS, and as such each FPD of the plurality of FPDs may not be able to report their power consumption. This may reduce the amount of wiring required in the vehicle, which may reduce vehicle weight and assembly and maintenance costs. The method may be compatible with a 'dumb' FPD. The method may not require the FPD to be provided with any information processing or transmitting functionality.

The method may comprise the flexible power device consuming power in accordance with the control signal as modulated by the identification signal. That is, the FPD may vary its power consumption in line with the control signal as modulated by the identification signal. For example, the EMS may send respective set-points to the different flexible power devices separately. The control signals may be non-unique. That is, the same control signal may be determined for a plurality of flexible power devices. The control signals may differ. That is, different control signals may be determined for different flexible power devices.

On top of each set-point (which is used as a reference by each flexible power device to modulate its power consumption), the EMS may add the identification signal (e.g., a sinusoidal signal with small amplitude relative to the set-point and given frequency). The identification signal may be unique to each flexible power device, e.g., a different frequency may be used for each flexible power device. If a flexible power device is on, the power consumption will be driven by the received, modulated set-point. As such, the identification signal will appear in the device's power consumption signal, which itself is part of the aggregate power consumption signal. Since the EMS receives the overall power consumption in the form of the aggregate power consumption signal, the feedback information it receives will contain the sum of the power consumption of all the flexible power devices in the zone, and hence any identification signal provided to the flexible power device(s) in that zone.

The aggregate power consumption signal may represent the total power consumption of the plurality of flexible power devices. Thus, the identification signal may be identifiable in the aggregate power consumption of the plurality of flexible power devices. The aggregate power consumption signal may be received from a summer configured to sum a power consumption signal from each flexible power device.

The method may comprise determining that the flexible power device is operating if (and only if) the identification signal is determined to be present. The method may comprise determining that the flexible power device is not operating if the identification signal is determined to be not present. By providing a control signal and respective identification signal to each flexible power device, and by receiving the aggregate power consumption signal, the method can determine which of the FPDs are using energy (e.g., on) and which are not.

The method may also comprise determining that a flexible power device has malfunctioned. For example, if the EMS instructs an FPD to be on using a control signal modulated by an identification signal, and the signature of the identification signal does not subsequently appear in the aggregate power consumption signal, then the method may conclude that the associated FPD is not operating, despite being instructed to.

The method may be employed in an EMS of a vehicle, such as an aircraft. The vehicle may comprise a plurality of FPDs and a power source arranged to provide electrical power to the plurality of FPDs. The EMS may be arranged to control the power consumption of each FPD and to receive an aggregate power consumption signal of the plurality of FPDs.

The plurality of FPDs may be distributed in a zone, and the EMS may be operable to send a control signal modulated with a respective identification signal to each FPD in the zone. That is, the method may be performed for each flexible power device in the zone. The aggregate power consumption signal may therefore be the total power used by the zone.

The vehicle may be a car, a train or an aircraft. While the method may be applicable in a wide variety of systems, it may find particular application in an aircraft where the management of power consumption can be particularly important. The power source may be an energy storage device, such as a battery or supercapacitor, or an electrical generator of the vehicle. Any suitable power source may be used. The EMS may be associated with a plurality of FPDs. The vehicle may comprise more than one EMS, each associated with a plurality of FPDs. Each FPD may be any suitable FPD for the relevant system, operable to modulate its power consumption in response to a received set-point. For example, the FPDs may comprise one or more of: a climate control system element, a lighting element, a passenger entertainment/information system element, a galley system element, a seat element; a sanitation system element, and so on. The FPDs may comprise one or more of: a food or drink heating device such as a microwave or a kettle; a seat position adjusting motor; a seat heating system; a ventilation fan; a seat reading light; a display screen; a passenger power supply such as a power supply socket or a wireless charging element; a hand dryer; a tap heating element, and so on.

The identification signal may be any suitably identifying signal. The identification signal may have a frequency. For example, the identification signal may be a sinusouidal signal. Determining whether the identification signal is present in the aggregate power consumption signal may comprise performing a Fourier Transform on the aggregate power consumption signal. The method may include using the EMS to perform the Fourier Transform. The Fourier transform may be a Fast Fourier Transform. The EMS may comprise a Fourier Transform (e.g. a Fast Fourier Transform) module operable to transform the aggregate power consumption signal. The Fourier Transform may decompose the aggregate power consumption signal into its constituent frequencies, thereby allowing the isolation and/or detection of the identification signal.

The EMS may comprise an identification module, operable to identify the identification signal in the output of the Fourier Transform module. Thus, determination of whether the identification signal is present in the aggregate power consumption signal may depend upon the output of the identification module.

The frequency of the identification signal may be selected according to a property of the FPD e.g. a preferred operating range such as a frequency range, or responsiveness of the FPD to changes in its set-point. The frequency of the identification signal may be selected to avoid disrupting the operation of the FPD. For example, if the FPD preferably operates within a predetermined signal range, the identification signal may be selected so that modulation of the control signal thereby does not result in the FPD operating outside the predetermined range. Thus, the identification signal would not be selected to cause e.g., lights to flicker, or seat motors to stutter and so on. Thus, the identification signal may be selected based upon the associated FPD and/or its characteristics. Any identification signal may be used suitable for the associated FPD.

Although any suitable identification signal may be used, in some instances the frequency of the identification signal may be above e.g. 1 kHz. The frequency of the identification signal may be above 500 Hz. The frequency of the identification signal may be above 1.5 kHz. The frequency of the identification signal may be above 2 kHz.

The frequency of the identification signal may be below a suitable limit. A frequency above e.g. 1 kHz may be less invasive because its effect on the operation of the FPD may be too rapid to be perceptible by a passenger (e.g., dimming LEDs or lights). The response time of the EMS may also be further reduced because high frequency signals propagate through the power system faster. The identification signal may be high frequency with respect to operation frequencies of the flexible power devices.

The identification signal may have any suitable bandwidth, and may be selected based upon a property of the system. For example, the identification signal may be based upon the preferred operating range of the FPDs in the system. The identification signal may have a bandwidth less than 100 Hz (e.g., on slow-dynamics components like heating elements). The identification signal may have a bandwidth less than 50 Hz. The identification signal may have a bandwidth less than 150 Hz. The identification signal may have a bandwidth less than 200 Hz. The identification signal may have a narrow bandwidth with respect to operation frequencies of flexible power devices.

The identification signal may comprise a single frequency.

That is, the identification signal may comprise only a single frequency. The use of a single frequency identification signal or a narrow bandwidth identification signal may allow a large number of FPDs to be monitored simultaneously via a single communication channel e.g., because each FPD can have a unique identification signal allocated to it whist allowing the identification signals to remain distinguishable. The method may therefore be applied in power systems in which the identification signals are aggregated after provision to the FPDs. This may reduce the weight, complexity and maintenance or manufacturing costs of a vehicle in which the method is implemented or allow the method to be implemented in existing vehicles with little or no modification.

An amplitude of the identification signal may be selected to remain within a safe operating range of the FPD. The amplitude of the identification signal may be selected such that an input voltage of the FPD remains within a safe input voltage range of the FPD. The amplitude of the identification signal may be selected for compliance with the IEC 60947-2 or MIL-STD-704 international standards. Any suitable standards may be used, as required by the specific application of the method.

The identification signal may have an amplitude which is less than e.g., 1% of the amplitude of the control signal. The amplitude may be less than 0.1%, 0.01%, or 0.001 % of the control signal. The amplitude of the identification signal may be selected to be greater than an electronics resolution of the flexible power device. The flexible power device may comprise an analog to digital converter and the amplitude of the identification signal may be selected to be greater than an electronics resolution of the analog to digital converter.

A low amplitude identification signal may be less invasive. A low amplitude identification signal may be less noticeable or unnoticeable in the output of the flexible power device e.g. unnoticeable to passengers. It may have a minimal or no impact on the operation of the FPD. For example, a low amplitude identification signal may reduce or eliminate perceptible flickering of lights or displays. Thus, the identification signal may be selected based upon the flexible power device so as not to negatively impact operation of the flexible power device e.g. not to reduce its energy efficiency.

The method may comprise modifying power consumption of the flexible power device based upon the determination of whether the identification signal is present in the aggregate power consumption signal. The method may comprise providing an instruction to cause the flexible power device to reduce power consumption in response to the identification signal being determined to be present in the aggregate power consumption signal. The method may include providing an instruction to cause the flexible power device to become inoperable (e.g. turn off) in response to determining that the identification signal is present in the aggregate power consumption signal. The method may include providing an instruction to cause the flexible power device to change its power consumption in response to determining that the identification signal is present in the aggregate power consumption signal (e.g. increase power consumption, reduce power consumption, or turn off). The control signal may comprise a set-point for the flexible power device. Providing the instruction may comprise reducing the set-point.

The method may comprise providing an instruction to cause the flexible power device to reduce power consumption only if the identification signal is determined to be present in the aggregate power consumption signal. The method may comprise providing an instruction to cause the flexible power device to turn off if the identification signal is determined to be present in the aggregate power consumption signal. The method may include providing an instruction to cause the flexible power device to turn on in response to determining that the identification signal is not present in the aggregate power consumption signal.

The control signal may be a first control signal; the flexible power device may be a first flexible power device of the plurality of flexible power devices; the identification signal may be a first identification signal; and the method may further comprise determining a second control signal for a second flexible power device of the plurality of flexible power devices; modulating the second control signal with a second identification signal; providing the second control signal to the second flexible power device of the plurality of flexible power devices; and determining whether the second identification signal is present in the aggregate power consumption signal.

The provision of a second identification signal may allow the method to monitor a plurality of FPDs simultaneously. This may allow instantaneous determination of which of the FPDs are operating, e.g. without needing to cycle through the plurality of FPDs. An EMS employing the method may therefore have a lower response time and be more energy efficient.

The method may comprise determining a control signal for each of the plurality of FPDs; modulating each control signal with an identification signal; providing each control signal to each flexible power device respectively; and determining whether each identification signal is present in the aggregate power consumption signal. That is, the method may monitor all of the plurality of FPDs. The plurality of FPDs may comprise greater than ten FPDs. The plurality of FPDs may comprise greater than twenty FPDs. The method may comprise determining a plurality of respective power consumption signals for each of the plurality of flexible power devices, modulating each of the respective power consumption signals with a respective identification signal, and determining whether each of the identification signals is present in the aggregate power consumption signal Thus, the method may be used to check whether each of the plurality of flexible power devices is using power.

The second identification signal may be different to first identification signal. All identification signals of the plurality of identification signals may be different from one another. That is, each identification signal may be unique so that it is correctly identifies the respective flexible power device.

The first control signal and the second control signal may be provided and respectively modulated by the first identification signal and the second identification signal simultaneously. Each identification signal may be as described herein with reference to the first identification signal. Each identification signal may be a sinusoidal signal having frequency and amplitude selected so as not to interfere with its associated flexible power device. Each identification signal may be selected based upon at least one property of its associated flexible power device.

The first identification signal may have a first frequency and the second identification signal may have a second frequency.

The method may be computer implemented.

The energy management method may be employed in any suitable system comprising flexible power devices. For example, the energy management method may be employed in vehicles, such as aircraft, trains or automobiles. The energy management method may be employed in a power station, power grid or a building such as a home or office.

The method may be a method of controlling energy usage of a flexible power device. The method may be a method of controlling energy usage of a plurality of flexible power devices.

According to a second aspect of the invention, there is provided a computer program product comprising instructions which, when the program is executed by a computer, cause the computer to carry out the method of the first aspect of the invention.

According to a third aspect of the invention, there is provided an energy management system (EMS) for an aircraft adapted to perform the method of the first aspect of the invention.

The energy management system may comprise a processor adapted to perform the method of the first aspect. The energy management system may comprise a memory containing instructions which when executed cause the EMS to carry out the method as recited herein with reference to the first aspect of the invention. The energy management system may comprise an identification signal module configured to generate one or more identification signals. The energy management system may comprise a control signal module configured to generate one or more control signals. The control signal module may be configured to determine an appropriate control signal according to a total power consumption threshold. The total power consumption threshold may be a safe power consumption budget. The total power consumption threshold may be determined according to a phase of a mission of the vehicle. The energy management system may comprise an analysis module configured to receive the aggregate power consumption signal and determine whether the identification signal is present in the aggregate power consumption signal. The analysis module may be configured to perform a Fourier Transform (e.g. a Fast Fourier Transform) on the aggregate power consumption signal to thereby extract the identification signal.

The energy management system may form part of a power network. The power network may comprise a plurality of flexible power devices. Each flexible power device may be configured to receive a control signal from the energy management system and, when operating, consume an amount of power determined by the respective control signal. The power network may comprise a power summer configured to aggregate the power consumption of the plurality of flexible power devices. The power network may comprise an energy source configured to provide power to the flexible power devices. The energy source may comprise one or more of an energy storage device, such as a battery, fuel cells, or supercapacitor, and a generator. The energy management system may be configured to receive an aggregate power consumption signal from the energy source.

According to a fourth aspect of the invention, there is provided an aircraft comprising: the energy management system of the third aspect of the invention; a power source; and a plurality of flexible power devices.

According to another aspect of the invention, there is provided a method of managing a plurality of flexible power devices, comprising sending an identifying signal to each flexible power device, receiving an aggregate signal from the plurality of flexible power devices, and transforming the aggregate signal to determine if any of the identifying signals are present. The method may comprise any of the feature of the method as recited herein with respect to the first aspect of the invention.

Certain preferred embodiments of the invention are described below by way of example only and with reference to the accompanying figures in which:
Figure 1 shows a schematic of a power network for an aircraft;
Figure 2 shows a schematic of a power network for an aircraft in a first configuration; and
Figure 3 shows the schematic of the power network for an aircraft of Fig. 2 in a second configuration.

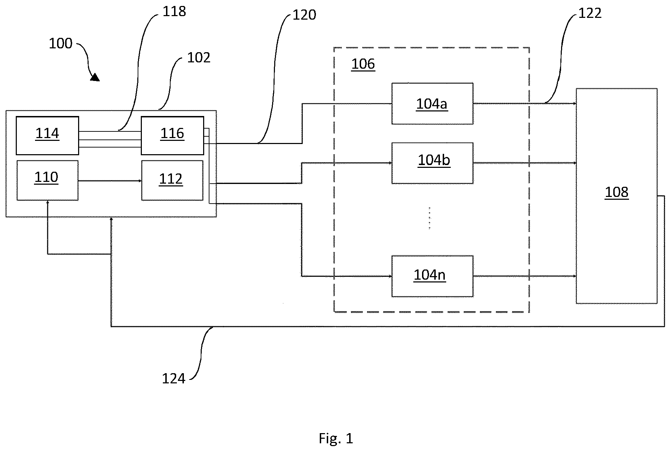

Figures 1, 2 and 3 show a power network 100. The power network 100 may be part of any suitable system, such as an aircraft or another vehicle. The power network 100 comprises an energy management system (EMS) 102. The EMS 102 may be implemented as a centralised component or as a distributed architecture. The EMS 102 is associated with a plurality of flexible power devices (FPDs) 104a, 104b, 104n. In Figure 1, three FPDs 104a, 104b, 104n are illustrated, though in embodiments the EMS may be associated with any suitable number of FPDs.

The FPDs 104a, 104b, 104n comprise a seat position adjusting motor 104a, a seat heating system 104b and a seat reading light 104c. In other embodiments, the FPDs 104a, 104b, 104n may comprise any suitable flexible power device, such as one or more of: a climate control system element, a lighting element, a passenger entertainment/information system element, a galley system element, a seat element; a sanitation system element, and so on. The FPDs 104a, 104b, 104n may comprise one or more of: a food or drink heating device such as a microwave or a kettle; a seat position adjusting motor; a seat heating system; a ventilation fan; a seat reading light; a display screen; a passenger power supply such as a power supply socket or a wireless charging element; a hand dryer; a tap heating element.

The FPDs are comprised in a zone 106. The zone 106 comprises all flexible power devices e.g. associated with an individual seat. The zone 106 could comprise all of the flexible power devices associated with one or more of a climate control system, a lighting system, a passenger entertainment/information system, a galley system or a sanitation system. The aircraft comprises a plurality of such zones. In Figure 1, the EMS 102 is associated with a single zone 106. The EMS 102 could be associated with a plurality of zones, such as for example all of the seats of a row, all of the seats of a cabin section, all of the seats of the aircraft, or all of the zones of the aircraft. The EMS could be associated with the flexible power devices of galley of an aircraft, a bathroom of an aircraft, an aircraft cabin lighting system or an aircraft cabin climate control system. The EMS could be part of another vehicle or of a building such as a home, office, factory or hospital.

The FPDs 104a, 104b, 104n are connected to a power source (not shown). The connection could be direct or could be via one or more other components of the power network 100. The power source may comprise a generator or a power storage device such as a battery or supercapacitor. The FPDs 104a, 104b, 104n may be connected to a plurality of power sources. When operating, each FPD 104a, 104b, 104n consumes power from the power source. When not operating, each FPD 104a, 104b, 104n does not consume power from the power source. The amount of power each FPD 104a, 104b, 104n consumes when operating is variable. Each FPD 104a, 104b, 104n is configured to consume an amount of power in accordance with a control signal 118 received by the FPD 104a, 104b, 104n. The amount of power consumed by each FPD 104a, 104b, 104n also depends on external factors such as passenger requests. For example, the power consumed by a light may be determined by whether the light is switched on or off by a passenger, and on a control signal which determines the voltage across the light when the light is on.

The EMS 102 comprises a control signal generating module 114. The control signal generating module 114 is configured to generate a control signal 118 for each FPD 104a, 104b, 104n. That is, in this embodiment, the control signal generating module 114 generates three control signals 118. The control signals 118 may be non-unique. The control signals 118 may be indistinguishable from one another. The control signals 118 may differ from one another. For example, the control signal generating module may generate a first control signal for a first subset of FPDs and a second control signal for a second subset of FPDs.

The EMS 102 comprises an identification signal generating module 116. The control signal generating module 114 provides the control signals 118 to the identification signal generating module 116. The identification signal generating module 116 generates an identification signal for each FPD 104a, 104b, 104n. The identification signal generating module 116 modulates each control signal 118 with the respective identification signal to form a modulated control signal 120.

Each identification signal is unique. In this embodiment each identification signal is unique to the zone 106. In other embodiments, each identification signal may be unique among multiple zones or among the entire aircraft. Each identification signal comprises a single frequency. The amplitude of the identification signal is less than 1% the amplitude of the control signal 118. In embodiments, each identification signal may comprise a different range of frequencies. In embodiments, the identification signals may each comprise a non-overlapping range of frequencies.

The EMS 102 is operable to control each FPD, and therefore is connected to each FPD 104a, 104b, 104n. The connection may be wired or wireless. The connection may be direct or may be via one or more other components of the power network 100. The EMS 102 provides a modulated control signal 120 to each FPD 104a, 104b, 104n. In this embodiment, the EMS 102 provides the modulated control signal 120 to each FPD 104a, 104b, 104n via a data connection between the EMS 102 and each FPD 104a, 104b, 104n. In other embodiments, the EMS 102 may provide the modulated control signal 120 to each FPD 104a, 104b, 104n via a power line to each FPD 104a, 104b, 104n. For example, the modulated control signal 120 may comprise an instruction to the FPD 104a, 104b, 104n to limit consumption to a certain amount of power, or the modulated control signal 120 may comprise a direct modulation of the amount of power available to the FPD 104a, 104b, 104n.

Each FPD 104a, 104b, 104n receives a modulated control signal 120. Each FPD 104a, 104b, 104n is configured to adjust its power consumption in accordance with the modulated control signal 120. The power consumption of each FPD 104a, 104b, 104n is therefore modulated by a respective identification signal.

The power network 100 comprises a power summer 108. Each FPD 104a, 104b, 104n is connected to the power summer 108. The connection may be wired or wireless. The connection may be direct or may be via one or more other components of the power network 100. The connection may be via a power supply line. In Figure 1, the power summer 102 is depicted as a separate component to the EMS 102, though in other embodiments, the power summer 108 may be part of the EMS 102. The power summer 108 receives a power consumption signal 122 from each FPD 104a, 104b, 104n. In the embodiment of Figure 1, each FPD is configured to generate a power consumption signal for communication to the power summer 108. In another embodiment, the FPDs are not so configured, and the power summer obtains a power consumption signal for each FPD 104a, 104b, 104n by directly or indirectly monitoring the amount of power consumed by the respective FPD 104a, 104b, 104n.

The power summer 108 calculates an aggregate power consumption signal 124 by summing the power consumption signals 122 of the FPDs 104a, 104b, 104n. In the embodiment of Figure 1, the power summer 108 is a unitary component. In other embodiments, the power summer 108 could be a distributed system. For example, the power network 100 may comprise a zone power summer for each of a plurality of zones and a master power summer configured to sum aggregate power consumption signals of the zone power summers.

The power summer 108 is connected to the EMS 102. The connection could be wired or wireless. The connection could be direct or could be via one or more other components of the power network 100. As mentioned above, the power summer 108 could be part of the EMS 102. The power summer 108 provides the aggregate power consumption signal 124 to the EMS 102.

The EMS 102 comprises an analysis module 110. The analysis module 110 receives the aggregate power consumption signal 124. The analysis module 110 analyses the aggregate power consumption signal 124. The analysis module 110 performs a Fast Fourier Transform on the aggregate power consumption signal 124. In other embodiments, the analysis module 110 performs additional or alternative signal analysis on the aggregate power consumption signal 124. The analysis module 110 outputs the frequencies comprised in the aggregate power consumption signal 124. The frequencies may be output in the form of a frequency spectrum. If an FPD 104a, 104b, 104n is operating, the aggregate power consumption signal 124 will comprise the identification signal associated with that FPD, and the frequency comprised in that identification signal will be output by the analysis module 110. If an FPD 104a, 104b, 104n is not operating, the aggregate power consumption signal 124 will not comprise the identification signal associated with that FPD and the frequency comprised in that identification signal will not be output by the analysis module 110.

The EMS 102 comprises an identification module 112. The identification module 112 is configured to determine which of the FPDs 104a, 104b, 104n is operating. The analysis module 110 provides the frequencies comprised in the aggregate power consumption signal 124 to the identification module 112. The identification module 112 is configured to determine whether the identification signal is present in the aggregate power consumption signal 124. The identification module 112 determines that an FPD 104a, 104b, 104n is operating if the identification signal associated with that FPD 104a, 104b, 104n is determined to be present in the aggregate power consumption signal 124. That is, the identification module 112 determines that an FPD 104a, 104b, 104n is operating if the frequency of the identification signal associated with that FPD 104a, 104b, 104n is output by the analysis module 110. The identification module 112 determines that the flexible power device 104a, 104b, 104n is not operating if the identification signal associated with that FPD 104a, 104b, 104n is determined to be not present in the aggregate power consumption signal 124.

The EMS 102 stores a power consumption threshold. The power consumption threshold may be stored in a memory of the EMS 102. The power consumption threshold may be pre-set or may be dynamic. The power consumption threshold may be determined according to a phase of a mission of the vehicle. The power consumption threshold may be received by the EMS 102 from another component of the power network 100 or may be calculated by the EMS 102. The power consumption threshold is a safe power consumption budget for the zone 106.

The EMS is configured to determine the control signals 118 such that the aggregate power consumption signal 124 does not exceed the power consumption threshold. If the aggregate power consumption signal 124 approaches the power consumption threshold, the EMS 102 will reduce one or more of the control signals 118 in order to reduce power consumption by one or more of the FPDs 104a, 104b, 104n. The EMS 102 is configured to reduce a control signal 118 for an FPD of the FPDs 104a, 104b, 104n which is determined to be operating by the identification module 112. The EMS 102 is configured to select an operating FPD of the FPDs 104a, 104b, 104n for power consumption reduction. That is, the EMS 102 is configured to select an operating FPD of the FPDs 104a, 104b, 104n according to the output of the identification module 112. The EMS 102 subsequently instructs the selected FPD to reduce its power consumption by reducing the control signal 118 associated with the selected FPD. The EMS may instruct the selected FPD to turn off.

The EMS 102 may be configured to determine that excess power is available. That is, the EMS 102 may be configured to determine that the aggregate power consumption signal 124 is lower than the power consumption threshold. In response to determining that excess power is available, the EMS 102 may increase one or more of the control signals 118 in order to permit increased power consumption by one or more of the FPDs 104a, 104b, 104n and/or the EMS 102 may instruct one or more of the FPDs 104a, 104b, 104n to turn on. The EMS 102 may be configured to select a non-operating FPD of the FPDs 104a, 104b, 104n for turning on. That is, the EMS 102 may be configured to select a non-operating FPD of the FPDs 104a, 104b, 104n according to the output of the identification module 112. The EMS 102 may subsequently instruct the selected FPD to turn on.

One or more of the analysis module 110, identification module 112, control signal generating module 114 and identification signal generating module 116 may be implemented as a software module operating on a processor of the EMS 102.

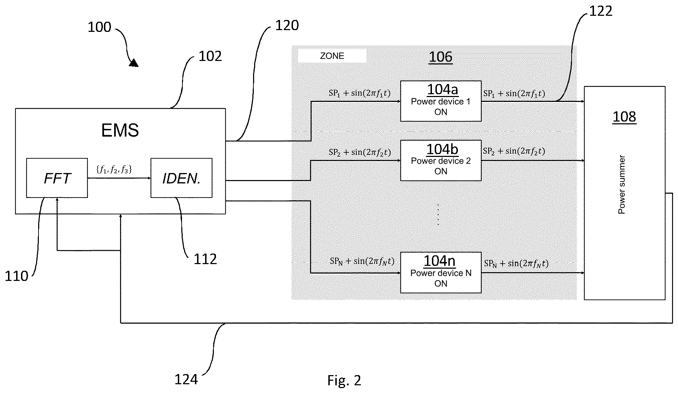

In Figure 2, all of the flexible power devices 104a, 104b, 104n are operational e.g. on. That is, all of the flexible power devices 104a, 104b, 104n are turned on and consuming power. All three identification signals are received by the summer via the power consumption signals 122 and are therefore present in the aggregate power consumption signal 124. The identification module 112 therefore determines that all of the flexible power devices 104a, 104b, 104n are operational.

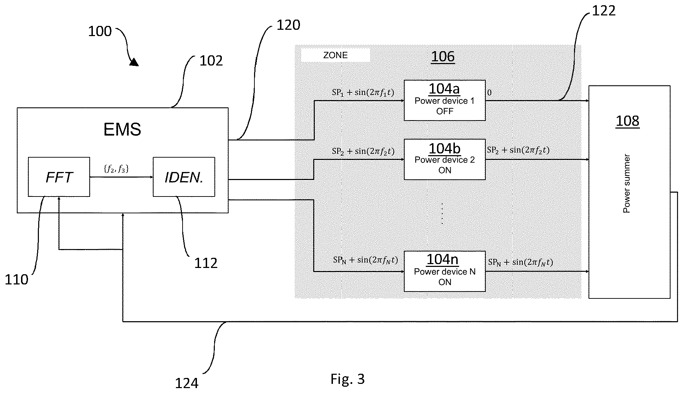

In Figure 3, one of the flexible power devices 104a is non-operational e.g. off. That is, the flexible power device 104a is turned off and is not consuming power. The identification signal corresponding to the flexible power device 104a is not received by the summer via the power consumption signals 122 and is therefore not present in the aggregate power consumption signal 124. The identification module 112 therefore determines that the flexible power device 104a is non-operational.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

1. An energy management method comprising:
determining a control signal (118) for a flexible power device (104a) of a plurality of flexible power devices (104);
modulating the control signal with an identification signal;
providing the control signal (120) to the flexible power device of the plurality of flexible power devices;
receiving an aggregate power consumption signal (124) of the plurality of flexible power devices from the plurality of flexible power devices; and
determining whether the identification signal is present in the aggregate power consumption signal.

2. The method of claim 1, in which the identification signal has a frequency and determining whether the identification signal is present in the aggregate power consumption signal (124) comprises performing a Fourier transform on the aggregate power consumption signal.

3. The method of claim 1 or claim 2, in which the identification signal is selected to avoid disrupting the operation of the flexible power device (104a).

4. The method of any preceding claim, in which the frequency of the identification signal is above 1 kHz.

5. The method of any preceding claim, in which the identification signal has a bandwidth less than 100 Hz.

6. The method of any preceding claim, in which the identification signal comprises a single frequency.

7. The method of any preceding claim, in which an amplitude of the identification signal is selected such that the control signal remains within a safe operating range of the flexible power device (104a).

8. The method of any preceding claim, in which the identification signal has an amplitude which is less than 1% of the amplitude of the control signal (118).

9. The method of any preceding claim, comprising providing an instruction to cause the flexible power device (104a) to reduce power consumption in response to the identification signal being determined to be present in the aggregate power consumption signal (124).

10. The method of any preceding claim, in which the control signal (118) is a first control signal; the flexible power device (104a) is a first flexible power device of the plurality of flexible power devices (104); the identification signal is a first identification signal; and the method further comprises determining a second control signal for a second flexible power device (104b) of the plurality of flexible power devices; modulating the second control signal with a second identification signal; providing the second control signal to the second flexible power device of the plurality of flexible power devices; and determining whether the second identification signal is present in the aggregate power consumption signal (124).

11. The method of claim 10, in which the first control signal (118) and the second control signal are provided and respectively modulated by the first identification signal and the second identification signal simultaneously.

12. The method of claim 10 or 11, in which the first control signal (118) has a first frequency and the second control signal has a second frequency.

13. A computer program product comprising instructions which, when the program is executed by a computer, cause the computer to carry out the method of any of claims 1 to 12.

14. An energy management system (102) for an aircraft adapted to perform the method of any of claims 1 to 12.

15. An aircraft comprising:
the energy management system (102) of claim 14;
a power source; and
a plurality of flexible power devices (104).
